# EUROPEAN PATENT APPLICATION

(11) **EP 4 513 742 A1**
(43) Date of publication of application: **26.02.2025**
(21) Application number: 22938541.4
(22) Date of filing: 22.04.2022
(51) Int. Cl.: H02P 5/46

(54) **MOTOR CONTROLLER**

(71) Applicant: MITSUBISHI ELECTRIC CORPORATION, Chiyoda-ku Tokyo 100-8310 (JP)
(72) Inventor: TANIWAKI Shota, Tokyo 100-8310 (JP); AKIYAMA Shuzo, Tokyo 100-8310 (JP)
(74) Representative: Hoffmann Eitle
(86) International application number: PCT/JP2022/018504
(87) International publication number: WO 2023/203741

(57) **Abstract**

A motor controller (1) is a motor controller that controls a first motor (M1) and a second motor (M2) which share an output shaft, and includes: a first control unit (10a) configured to include a voltage conversion circuit (16) that converts a first voltage output from a first power source (PSI) into a predetermined voltage, and to control the first motor using the predetermined voltage converted by the voltage conversion circuit; and a second control unit (10b) configured to control the second motor using a second voltage output from a second power source (PS2).

## Description

### [Technical Field]

The present disclosure relates to a motor controller.

### [Background Art]

An electric power steering device is a device that adds a steering assist force to a steering mechanism of a vehicle such as an automobile, and includes a motor that generates a steering assist torque for steering, and a motor controller that controls the motor. The motor controller of the electric power steering device calculates an instruction current value for causing the motor to generate a required steering assist torque, and outputs a motor current based on the calculated instruction current value to the motor.

In recent years, some vehicles have been equipped with an automatic steering system that supports driving of a driver. In the vehicle equipped with the automatic steering system, an electric power steering device is controlled in order to improve a steering feel of the driver or to perform automatic steering. Specifically, a motor controller of the electric power steering device controls a motor according to a control amount based on the steering of the driver, a control amount based on a peripheral environment of the host vehicle measured by measuring means such as a camera or a radar, or the like.

Patent Document 1 below discloses an electric power steering device having redundancy by providing two systems of motors and motor controllers. In this electric power steering device, even in a case where a failure occurs in any one of the two systems, control is performed by the other system, so that a function of the electric power steering device can be maintained.

### [Citation List]

### [Patent Document]

[Patent Document 1]
Japanese Unexamined Patent Application, First Publication No. 2020-195236

### [Summary of Invention]

### [PROBLEM TO BE SOLVED BY THE INVENTION]

Meanwhile, in the electric power steering device in which the two systems of the motors and the motor controllers are provided, there may be a case where voltages of external power sources of the systems are different from each other. In such a case, it is necessary to change a winding thickness or the number of windings of the motor according to the voltage of the external power source, and thus characteristics of the motors provided in the systems are different from each other. Accordingly, even in a case where the motors provided in the systems output the same motor output, there is a problem in that torque ripple or noise and vibration (NV) performance deteriorates.

The present disclosure has been made in view of the above circumstances, and an object of the present disclosure is to provide a motor controller capable of improving torque ripple or NV performance even in a case where different voltages are supplied to a plurality of systems that control motors.

### [MEANS TO SOLVE THE PROBLEM]

In order to solve the above problem, a motor controller according to an aspect of the present disclosure is a motor controller for controlling a first motor and a second motor which share an output shaft, the motor controller including: a first control unit configured to include a voltage conversion circuit that converts a first voltage output from a first power source into a predetermined voltage, and to control the first motor using the predetermined voltage converted by the voltage conversion circuit; and a second control unit configured to control the second motor using a second voltage output from a second power source.

### [EFFECTS OF THE INVENTION]

According to the present disclosure, there is an effect that torque ripple or NV performance can be improved even in a case where different voltages are supplied to a plurality of systems that control motors.

### [Brief Description of Drawings]

FIG. 1 is a block diagram showing a configuration of a main part of a motor controller according to a first embodiment of the present disclosure.
FIG. 2 is a plan view of a substrate showing a mounting example of the motor controller according to the first embodiment of the present disclosure.
FIG. 3 is a block diagram showing a configuration of a main part of a motor controller according to a second embodiment of the present disclosure.
FIG. 4 is a plan view of a substrate showing a mounting example of the motor controller according to the second embodiment of the present disclosure.
FIG. 5 is a block diagram showing a configuration of a main part of a motor controller according to a third embodiment of the present disclosure.
FIG. 6 is a plan view of a substrate showing a mounting example of the motor controller according to the third embodiment of the present disclosure.
FIG. 7 is a block diagram showing a configuration of a main part of a motor controller according to a fourth embodiment of the present disclosure.
FIG. 8 is a block diagram showing a configuration of a main part of a motor controller according to a fifth embodiment of the present disclosure.

### [Description of Embodiments]

Hereinafter, a motor controller according to an embodiment of the present disclosure will be described in detail with reference to the drawings.

### [First Embodiment]

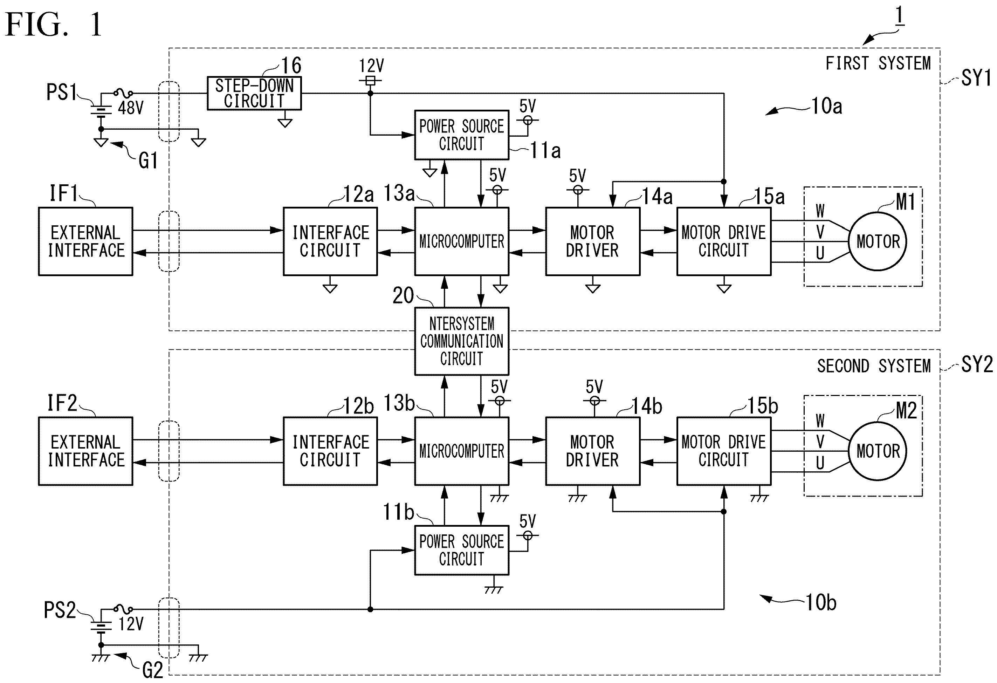

FIG. 1 is a block diagram showing a configuration of a main part of a motor controller according to a first embodiment of the present disclosure. The motor controller 1 shown in FIG. 1 is provided in, for example, an electric power steering device that adds a steering assist force to a steering mechanism of a vehicle such as an automobile. As shown in FIG. 1, the motor controller 1 of the present embodiment includes a control unit 10a (first control unit), a control unit 10b (second control unit), and an intersystem communication circuit 20, and controls a motor M1 (first motor) and a motor M2 (second motor).

The control unit 10a is operated by electric power supplied from an external power source PS1 (first power source), and controls the motor M1 based on a signal output from an external interface IF1. The control unit 10b is operated by electric power supplied from an external power source PS2 (second power source), and controls the motor M2 based on a signal output from an external interface IF2. The control unit 10a and the motor M1 form a first system SY1, and the control unit 10b and the motor M2 form a second system SY2. Details of the control units 10a and 10b will be described later.

The external power sources PS1 and PS2 are direct-current power sources with output voltages that differ from each other. The output voltage of the external power source PS1 is higher than the output voltage of the external power source PS2. For example, the external power source PS1 is a direct-current power source with an output voltage of 48 [V], and the external power source PS2 is a direct-current power source with an output voltage of 12 [V]. The external power sources PS1 and PS2 are connected to different grounds. For example, the external power source PS1 is connected to a ground G1, and the external power source PS2 is connected to a ground G2. In FIG. 1, the ground G1 and the ground G2 are indicated by different symbols for easy understanding.

The external interfaces IF1 and IF2 are, for example, circuits provided in the vehicle and are circuits that serve as interfaces of the control units 10a and 10b. The external interfaces IF1 and IF2 output an ignition signal indicating that a driver of the vehicle has operated an ignition key, a torque sensor signal indicating a steering torque of the driver, and a controller area network (CAN) signal indicating vehicle states such as a vehicle speed and an engine rotation speed.

The motors M1 and M2 are motors which share an output shaft and have the same specifications. The motors M1 and M2 are mounted on a steering column or a rack shaft of the vehicle, and generate a steering assist torque for steering under the control of the motor controller 1. The motors M1 and M2 are, for example, three-phase brushless motors having three-phase windings including a U-phase winding, a V-phase winding, and a W-phase winding. The motors M1 and M2 may be brushed motors or polyphase motors having three or more phases.

The control unit 10a includes a power source circuit 11a, an interface circuit 12a, a microcomputer 13a, a motor driver 14a, a motor drive circuit 15a, and a step-down circuit 16 (voltage conversion circuit). A ground of the control unit 10a is the ground G1, and the power source circuit 11a, the interface circuit 12a, the microcomputer 13a, the motor driver 14a, the motor drive circuit 15a, and the step-down circuit 16 are connected to the ground G1.

The step-down circuit 16 is connected to the external power source PS1 and steps down the output voltage (first voltage) of the external power source PS1 to a predetermined voltage. The step-down circuit 16 steps down, for example, the output voltage (48 [V]) of the external power source PS1 to the same voltage (12 [V]) as the output voltage of the external power source PS2. The voltage stepped down by the step-down circuit 16 is applied to the power source circuit 11a, the motor driver 14a, and the motor drive circuit 15a.

The power source circuit 11a is connected to an output of the step-down circuit 16 and generates a voltage based on the ground G1 from the voltage stepped down by the step-down circuit 16. The voltage generated by the power source circuit 11a is, for example, 5 [V]. The voltage generated by the power source circuit 11a is applied to the microcomputer 13a and the motor driver 14a.

The interface circuit 12a is connected to the external interface IF1. The interface circuit 12a receives various signals output from the external interface IF1 and outputs the received signals to the microcomputer 13a. In addition, the interface circuit 12a outputs various signals output from the microcomputer 13a to the external interface IF1.

The microcomputer 13a is operated by the voltage generated by the power source circuit 11a, and controls the motor M1 based on various signals output from the interface circuit 12a. Specifically, the microcomputer 13a calculates a required torque by using the torque sensor signal and the CAN signal indicating vehicle states such as a vehicle speed and an engine rotation speed output from the interface circuit 12a, and outputs a motor control amount to the motor driver 14a. In addition, the microcomputer 13a communicates with the microcomputer 13b (details will be described later) provided in the control unit 10b via the intersystem communication circuit 20.

The motor driver 14a is operated by the voltage generated by the power source circuit 11a and generates a drive signal for driving the motor drive circuit 15a under the control of the microcomputer 13a. Specifically, the motor driver 14a generates a drive signal corresponding to the motor control amount output from the microcomputer 13a and outputs the drive signal to the motor drive circuit 15a.

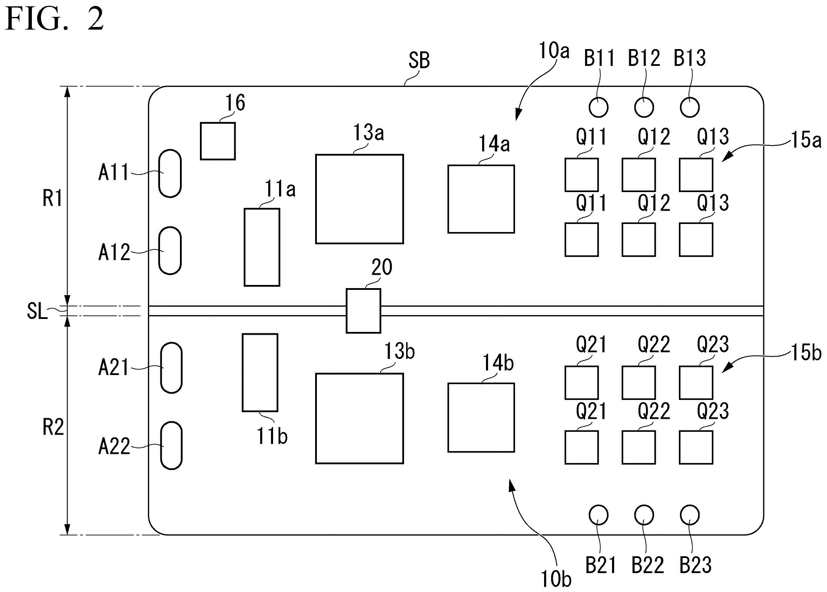

The motor drive circuit 15a drives the motor M1 based on the drive signal output from the motor driver 14a. The motor drive circuit 15b includes, for example, an inverter that converts direct-current power supplied from the step-down circuit 16 into alternating-current power and supplies the converted alternating-current power to the motor M1. As the inverter, for example, an inverter including a pair of switching elements Q11 corresponding to the U phase, a pair of switching elements Q12 corresponding to the V phase, and a pair of switching elements Q13 corresponding to the W phase (see FIG. 2) can be used. One of the pair of switching elements corresponding to each phase is used as a switching element of an upper arm, and the other is used as a switching element of a lower arm.

As the switching element, for example, a metal-oxide-semiconductor field effect transistor (MOSFET) can be used. It is noted that a semiconductor switch such as an insulated gate bipolar transistor (IGBT) or a bipolar transistor can be used in addition to the MOSFET.

The control unit 10b includes a power source circuit 11b, an interface circuit 12b, a microcomputer 13b, a motor driver 14b, and a motor drive circuit 15b. A ground of the control unit 10b is the ground G2, and the power source circuit 11b, the interface circuit 12b, the microcomputer 13b, the motor driver 14b, and the motor drive circuit 15b are connected to the ground G2. That is, the control units 10a and 10b include the grounds G1 and G2, respectively, which are separated from each other.

The power source circuit 11b is connected to the external power source PS2 and generates a voltage based on the ground G2 from the output voltage (second voltage) of the external power source PS2. The voltage generated by the power source circuit 11b is, for example, 5 [V]. The voltage generated by the power source circuit 11b is applied to the microcomputer 13b and the motor driver 14b.

The interface circuit 12b is connected to the external interface IF2. The interface circuit 12b receives various signals output from the external interface IF2 and outputs the received signals to the microcomputer 13b. In addition, the interface circuit 12b outputs various signals output from the microcomputer 13b to the external interface IF2.

The microcomputer 13b is operated by the voltage generated by the power source circuit 11b, and controls the motor M2 based on various signals output from the interface circuit 12b. Specifically, the microcomputer 13b calculates a required torque by using the torque sensor signal and the CAN signal indicating vehicle states such as a vehicle speed and an engine rotation speed output from the interface circuit 12b, and outputs a motor control amount to the motor driver 14b. In addition, the microcomputer 13b communicates with the microcomputer 13a provided in the control unit 10a via the intersystem communication circuit 20.

The motor driver 14b is operated by the voltage generated by the power source circuit 11b and generates a drive signal for driving the motor drive circuit 15b under the control of the microcomputer 13b. Specifically, the motor driver 14b generates a drive signal corresponding to the motor control amount output from the microcomputer 13b and outputs the drive signal to the motor drive circuit 15b.

The motor drive circuit 15b drives the motor M2 based on the drive signal output from the motor driver 14b. The motor drive circuit 15b includes, for example, an inverter that converts direct-current power supplied from the external power source PS2 into alternating-current power and supplies the converted alternating-current power to the motor M2. As the inverter, for example, an inverter including a pair of switching elements Q21 corresponding to the U phase, a pair of switching elements Q22 corresponding to the V phase, and a pair of switching elements Q23 corresponding to the W phase (see FIG. 2) can be used. One of the pair of switching elements corresponding to each phase is used as a switching element of an upper arm, and the other is used as a switching element of a lower arm.

As the switching element, for example, a MOSFET can be used similarly to the switching element provided in the motor drive circuit 15a of the control unit 10a. It is noted that a semiconductor switch such as an IGBT or a bipolar transistor can be used in addition to the MOSFET.

The intersystem communication circuit 20 is a circuit that implements communication between the microcomputer 13a of the control unit 10a provided in the first system SY1 and the microcomputer 13b of the control unit 10b provided in the second system SY2. The intersystem communication circuit 20 is provided, for example, to equalize (or approximately equalize) the steering assist torque generated by the motor M1 of the first system SY1 and the steering assist torque generated by the motor M2 of the second system SY2.

FIG. 2 is a plan view of a substrate showing a mounting example of the motor controller according to the first embodiment of the present disclosure. The substrate is a substrate in which wiring patterns formed of a material such as copper are formed on an insulating material such as a resin. The substrate may be a single-layer substrate in which only one layer of wiring patterns is formed or a multi-layer substrate in which a plurality of layers of wiring patterns are formed. In FIG. 2, the same reference signs are given to the configuration corresponding to the configuration shown in FIG. 1.

As shown in FIG. 2, a substrate SB is provided with a region R1 in which the control unit 10a is provided and a region R2 in which the control unit 10b is provided. A slit SL (region where no wiring pattern is formed) is formed between the region R1 and the region R2 to secure insulation between the region R1 and the region R2.

In the region R1 of the substrate SB, the power source circuit 11a, the microcomputer 13a, the motor driver 14a, the motor drive circuit 15a, and the step-down circuit 16 are mounted. The power source circuit 11a, the microcomputer 13a, the motor driver 14a, and the step-down circuit 16 are mounted as an IC chip. On the other hand, as the motor drive circuit 15a, the six switching elements constituting the inverter (the pair of switching elements Q11 corresponding to the U phase, the pair of switching elements Q12 corresponding to the V phase, and the pair of switching elements Q13 corresponding to the W phase) are mounted. In addition, there are cases where, in the region R1 of the substrate SB, an IC chip or the like that implements the interface circuit 12a is added according to interface specifications.

In the region R2 of the substrate SB, the power source circuit 11b, the microcomputer 13b, the motor driver 14b, and the motor drive circuit 15b are mounted. The power source circuit 11b, the microcomputer 13b, and the motor driver 14b are mounted as an IC chip. On the other hand, as the motor drive circuit 15b, the six switching elements constituting the inverter (the pair of switching elements Q21 corresponding to the U phase, the pair of switching elements Q22 corresponding to the V phase, and the pair of switching elements Q23 corresponding to the W phase) are mounted. In addition, there are cases where, in the region R2 of the substrate SB, an IC chip or the like that implements the interface circuit 12b is added according to interface specifications.

In addition, on the substrate SB, the intersystem communication circuit 20 is mounted between the microcomputer 13a and the microcomputer 13b to straddle the slit SL. The intersystem communication circuit 20 is mounted as an IC chip. The intersystem communication circuit 20 is connected to the microcomputer 13a through wiring patterns (not shown) formed in the region R1 of the substrate SB, and is connected to the microcomputer 13b through wiring patterns (not shown) formed in the region R2 of the substrate SB.

Through-holes A11 and A12 are formed in one end portion of the region R1 of the substrate SB, and through-holes A21 and A22 are formed in one end portion of the region R2 of the substrate SB. The through-holes A11 and A12 are through-holes into which a pair of lead wires connected to a positive electrode and a negative electrode of the external power source PS1 are inserted, and the through-holes A21 and A22 are through-holes into which a pair of lead wires connected to a positive electrode and a negative electrode of the external power source PS2 are inserted. The pair of lead wires connected to the positive electrode and the negative electrode of the external power source PS1 are inserted into the through-holes A11 and A12, whereby the power source is supplied from the external power source PS1 to the control unit 10a. Similarly, the pair of lead wires connected to the positive electrode and the negative electrode of the external power source PS2 are inserted into the through-holes A21 and A22, whereby the power source is supplied from the external power source PS2 to the control unit 10b.

Through-holes B11, B12, and B13 are formed near the other end portion in the region R1 of the substrate SB, and through-holes B21, B22, and B23 are formed near the other end portion in the region R2 of the substrate SB. The through-holes B11, B12, and B13 are through-holes into which lead wires respectively connected to the U-phase winding, the V-phase winding, and the W-phase winding of the motor M1 are inserted. The through-holes B21, B22, and B23 are through-holes into which lead wires respectively connected to the U-phase winding, the V-phase winding, and the W-phase winding of the motor M2 are inserted.

Next, an operation of the motor controller 1 having the above configuration will be described. For example, when the driver of the vehicle operates the ignition key, the ignition signals are input to the control units 10a and 10b through the external interfaces IF1 and IF2, respectively. The ignition signals input to the control units 10a and 10b are input to the microcomputers 13a and 13b through the interface circuits 12a and 12b, respectively. Then, the control of the motors M1 and M2 by the microcomputers 13a and 13b is started.

It should be noted that, in the control unit 10a, the output voltage (for example, 48 [V]) of the external power source PS1 is stepped down to a predetermined voltage (for example, 12 [V]) by the step-down circuit 16, and the stepped-down voltage is applied to the power source circuit 11a, the motor driver 14a, and the motor drive circuit 15a. In addition, in the power source circuit 11a, a voltage (for example, 5 [V]) based on the ground G1 is generated from the applied voltage (the voltage stepped down by the step-down circuit 16) and is applied to the microcomputer 13a and the motor driver 14a.

It should be noted that the voltage stepped down by the step-down circuit 16 and the output voltage of the external power source PS2 may be slightly different from each other. However, since the difference between the voltage stepped down by the step-down circuit 16 and the output voltage of the external power source PS2 is small, there is no problem when the control units 10a and 10b control the motors M1 and M2.

Similarly, in the control unit 10a, the output voltage (for example, 12 [V]) of the external power source PS2 is applied to the power source circuit 11b, the motor driver 14b, and the motor drive circuit 15b. In addition, in the power source circuit 11b, a voltage (for example, 5 [V]) based on the ground G2 is generated from the applied voltage (the output voltage of the external power source PS2) and is applied to the microcomputer 13b and the motor driver 14b.

When the driver of the vehicle performs steering, a steering torque is detected by a torque sensor (not shown). Torque sensor signals indicating the detected steering torque are input to the control units 10a and 10b through the external interfaces IF1 and IF2, respectively. The torque sensor signals input to the control units 10a and 10b are input to the microcomputers 13a and 13b through the interface circuits 12a and 12b, respectively.

When the torque sensor signals are input, the microcomputers 13a and 13b calculate the required torques by using the input torque sensor signals and the CAN signals indicating vehicle states such as a vehicle speed and an engine rotation speed, and output the motor control amounts to the motor drivers 14a and 14b, respectively. The motor drivers 14a and 14b generate the drive signals corresponding to the motor control amounts output from the microcomputers 13a and 13b, and output the drive signals to the motor drive circuits 15a and 15b, respectively. The motor drive circuits 15a and 15b drive the motors M1 and M2 based on the drive signals output from the motor drivers 14a and 14b, respectively. In this manner, the steering assist torque for the steering is generated.

As described above, in the present embodiment, of the control units 10a and 10b that are respectively connected to the external power sources PS1 and PS2 and respectively control the motors M1 and M2 which share the output shaft, the control unit 10a is provided with the step-down circuit 16. The output voltage of the external power source PS1 is then stepped down to the same voltage as the output voltage of the external power source PS2. Accordingly, even in a case where different voltages are supplied to the first system SY1 that controls the motor M1 and the second system SY2 that controls the motor M2, torque ripple or NV performance can be improved.

### [Second Embodiment]

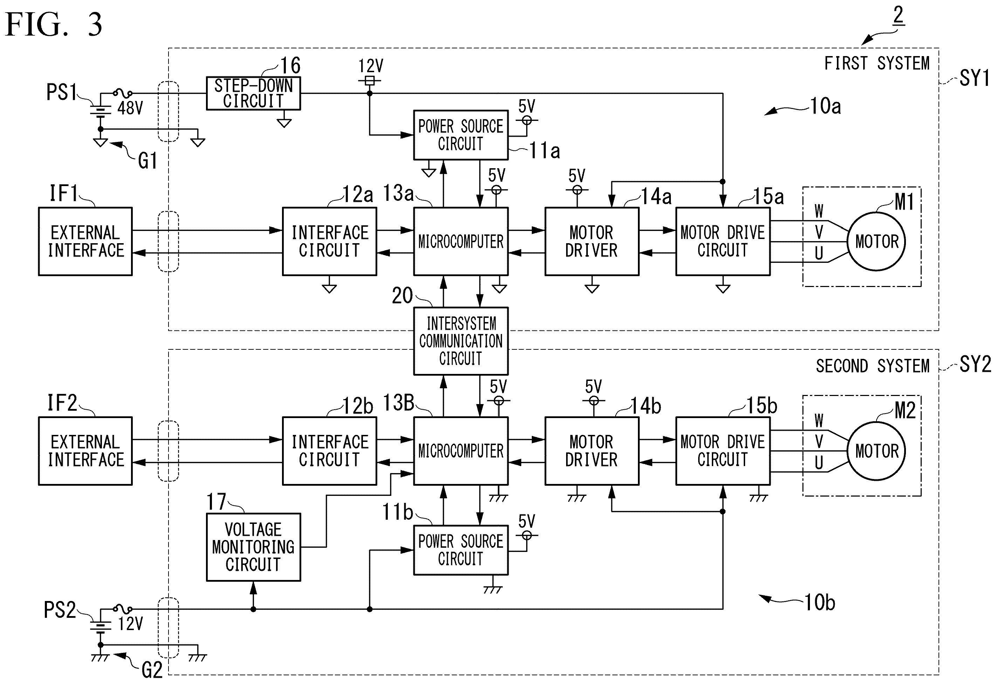

FIG. 3 is a block diagram showing a configuration of a main part of a motor controller according to a second embodiment of the present disclosure. In FIG. 3, blocks similar to those shown in FIG. 1 are denoted by the same reference numerals. As shown in FIG. 3, a motor controller 2 of the present embodiment has a configuration in which a voltage monitoring circuit 17 is added to the control unit 10b of the motor controller 1 shown in FIG. 1 and a microcomputer 13B is provided instead of the microcomputer 13b. The motor controller 2 is implemented by adding a motor output adjustment function of adjusting the output of the motor M2 according to the output voltage of the external power source PS2 to the second system SY2.

The voltage monitoring circuit 17 monitors the output voltage of the external power source PS2. The voltage monitoring circuit 17 outputs the monitored voltage to the microcomputer 13B. The microcomputer 13B is implemented by adding the motor output adjustment function described above to the microcomputer 13b shown in FIG. 1. Similarly to the microcomputer 13b, the microcomputer 13B calculates a required torque by using the torque sensor signal and the CAN signal indicating vehicle states such as a vehicle speed and an engine rotation speed output from the interface circuit 12b, and outputs a motor control amount to the motor driver 14b.

However, the microcomputer 13B adjusts the output of the motor M2 according to the voltage monitored by the voltage monitoring circuit 17. Specifically, in a case where the voltage monitored by the voltage monitoring circuit 17 is different from the voltage (for example, 12 [V]) stepped down by the step-down circuit 16 of the control unit 10a, the microcomputer 13B adjusts the motor output of the motor M2 so that the output of the motor M2 is the same as the output of the motor M1.

For example, in a case where the voltage monitored by the voltage monitoring circuit 17 is higher than the voltage stepped down by the step-down circuit 16 of the control unit 10a, the microcomputer 13B outputs a motor control amount reduced by the voltage difference to the motor driver 14b to adjust the motor output of the motor M2. In addition, in a case where the voltage monitored by the voltage monitoring circuit 17 is lower than the voltage stepped down by the step-down circuit 16 of the control unit 10a, the microcomputer 13B outputs a motor control amount increased by the voltage difference to the motor driver 14b to adjust the motor output of the motor M2.

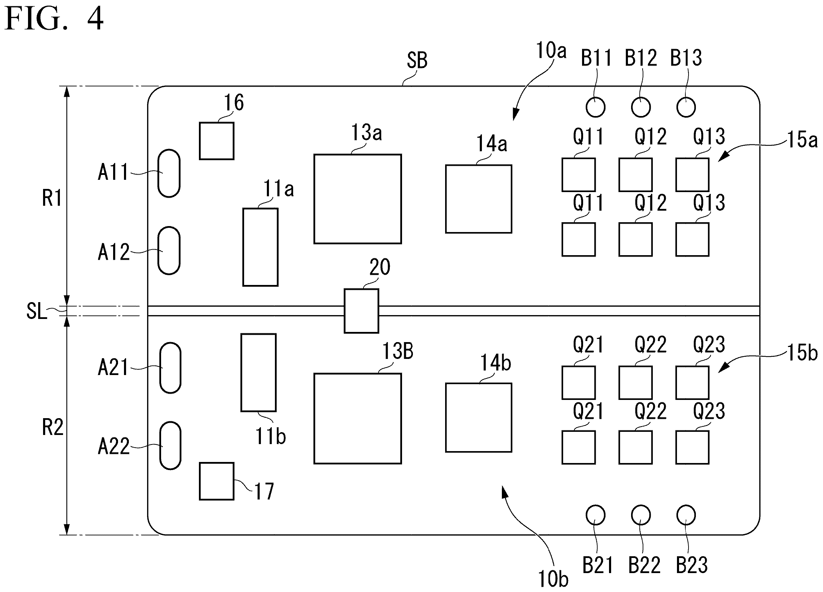

FIG. 4 is a plan view of a substrate showing a mounting example of the motor controller according to the second embodiment of the present disclosure. In FIG. 4, blocks similar to those shown in FIGS. 2 and 3 are denoted by the same reference numerals. As shown in FIG. 4, in the motor controller 2 of the present embodiment, the voltage monitoring circuit 17 is added to the region R2 of the substrate SB shown in FIG. 2, and the microcomputer 13B is provided instead of the microcomputer 13b. The voltage monitoring circuit 17 and the microcomputer 13B are mounted as an IC chip.

An operation of the motor controller 2 is basically the same as the operation of the motor controller 1 of the first embodiment, except that the output of the motor M2 is adjusted according to the voltage monitored by the voltage monitoring circuit 17. Therefore, a detailed description thereof will be omitted.

As described above, in the present embodiment, similarly to the first embodiment, of the control units 10a and 10b that are respectively connected to the external power sources PS1 and PS2 and respectively control the motors M1 and M2 which share the output shaft, the control unit 10a is provided with the step-down circuit 16. The output voltage of the external power source PS1 is then stepped down to the same voltage as the output voltage of the external power source PS2. Accordingly, even in a case where different voltages are supplied to the first system SY1 that controls the motor M1 and the second system SY2 that controls the motor M2, torque ripple or NV performance can be improved.

In addition, in the present embodiment, the voltage monitoring circuit 17 that monitors the output voltage of the external power source PS2 is provided in the control unit 10b, and the output of the motor M2 is adjusted according to the voltage monitored by the voltage monitoring circuit 17. Accordingly, torque ripple or NV performance can be improved compared to the first embodiment.

### [Third Embodiment]

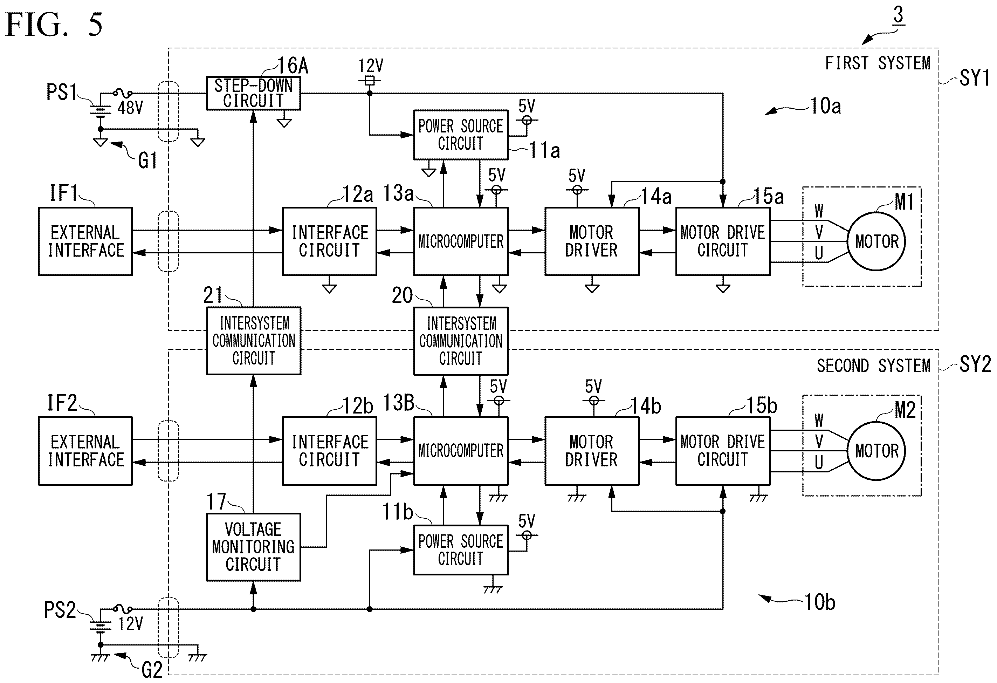

FIG. 5 is a block diagram showing a configuration of a main part of a motor controller according to a third embodiment of the present disclosure. In FIG. 5, blocks similar to those shown in FIG. 3 are denoted by the same reference numerals. As shown in FIG. 5, a motor controller 3 of the present embodiment has a configuration in which an intersystem communication circuit 21 (communication circuit) is added to the motor controller 2 shown in FIG. 3 and a step-down circuit 16A is provided instead of the step-down circuit 16. The motor controller 3 is implemented by adding a feedback function of feeding back a monitoring result of the output voltage of the external power source PS2 to the first system SY1.

The intersystem communication circuit 21 is a circuit that transmits the voltage monitored by the voltage monitoring circuit 17 to the step-down circuit 16A of the control unit 10a. The step-down circuit 16A steps down the output voltage of the external power source PS1 to the same voltage as the voltage transmitted from the intersystem communication circuit 21. The above-described feedback function is implemented by the intersystem communication circuit 21 and the step-down circuit 16A.

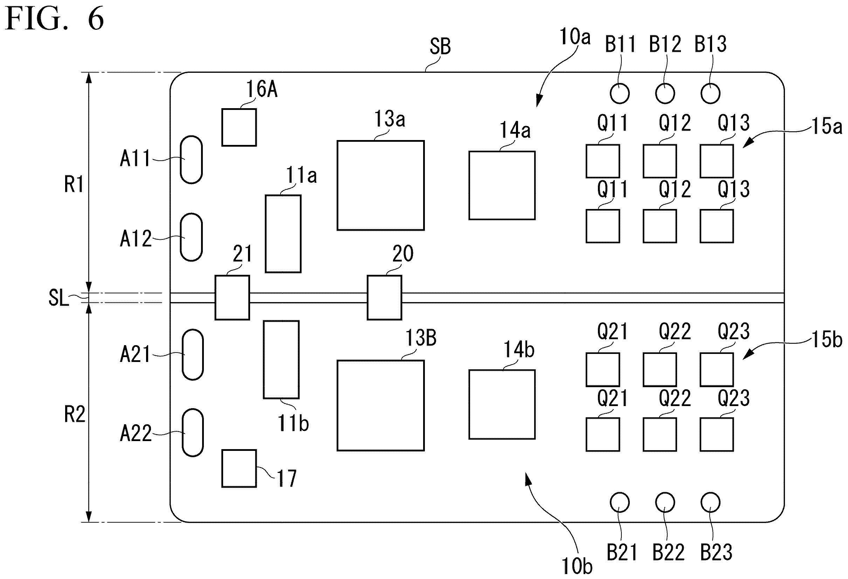

FIG. 6 is a plan view of a substrate showing a mounting example of the motor controller according to the third embodiment of the present disclosure. In FIG. 6, blocks similar to those shown in FIGS. 4 and 5 are denoted by the same reference numerals. As shown in FIG. 6, in the motor controller 3 of the present embodiment, the intersystem communication circuit 21 is mounted to straddle the slit SL, and the step-down circuit 16A is provided instead of the step-down circuit 16. The intersystem communication circuit 21 and the step-down circuit 16A are mounted as an IC chip. It should be noted that the intersystem communication circuit 21 is connected to the step-down circuit 16A through the wiring pattern (not shown) formed in the region R1 of the substrate SB, and is connected to the voltage monitoring circuit 17 through the wiring pattern (not shown) formed in the region R2 of the substrate SB.

An operation of the motor controller 3 is basically the same as the operation of the motor controller 1 of the first embodiment, except that the output voltage of the external power source PS1 is stepped down by the step-down circuit 16A to the same voltage as the voltage monitored by the voltage monitoring circuit 17. Therefore, a detailed description thereof will be omitted.

As described above, in the present embodiment, similarly to the first embodiment, of the control units 10a and 10b that are respectively connected to the external power sources PS1 and PS2 and respectively control the motors M1 and M2 which share the output shaft, the control unit 10a is provided with the step-down circuit 16. The output voltage of the external power source PS1 is then stepped down to the same voltage as the output voltage of the external power source PS2. Accordingly, even in a case where different voltages are supplied to the first system SY1 that controls the motor M1 and the second system SY2 that controls the motor M2, torque ripple or NV performance can be improved.

In addition, in the present embodiment, similarly to the second embodiment, the voltage monitoring circuit 17 that monitors the output voltage of the external power source PS2 is provided in the control unit 10b, and the output of the motor M2 is adjusted according to the voltage monitored by the voltage monitoring circuit 17. Accordingly, torque ripple or NV performance can be improved compared to the first embodiment.

Furthermore, in the present embodiment, the intersystem communication circuit 21 that transmits the voltage monitored by the voltage monitoring circuit 17 to the step-down circuit 16A is provided so that the output voltage of the external power source PS1 is stepped down to the same voltage as the voltage monitored by the voltage monitoring circuit 17. Accordingly, the voltage used in the control unit 10a and the voltage used in the control unit 10b can be aligned with each other, thereby improving torque ripple or NV performance compared to the second embodiment.

The voltage monitored by the voltage monitoring circuit 17 is output to the microcomputer 13B, and the microcomputer 13B can communicate with the microcomputer 13a via the intersystem communication circuit 20. Therefore, the voltage monitored by the voltage monitoring circuit 17 may be transmitted to the step-down circuit 16A through a path including the microcomputer 13B, the intersystem communication circuit 20, and the microcomputer 13a. In a case where the voltage monitored by the voltage monitoring circuit 17 is transmitted through this path, the intersystem communication circuit 21 may be omitted.

### [Fourth Embodiment]

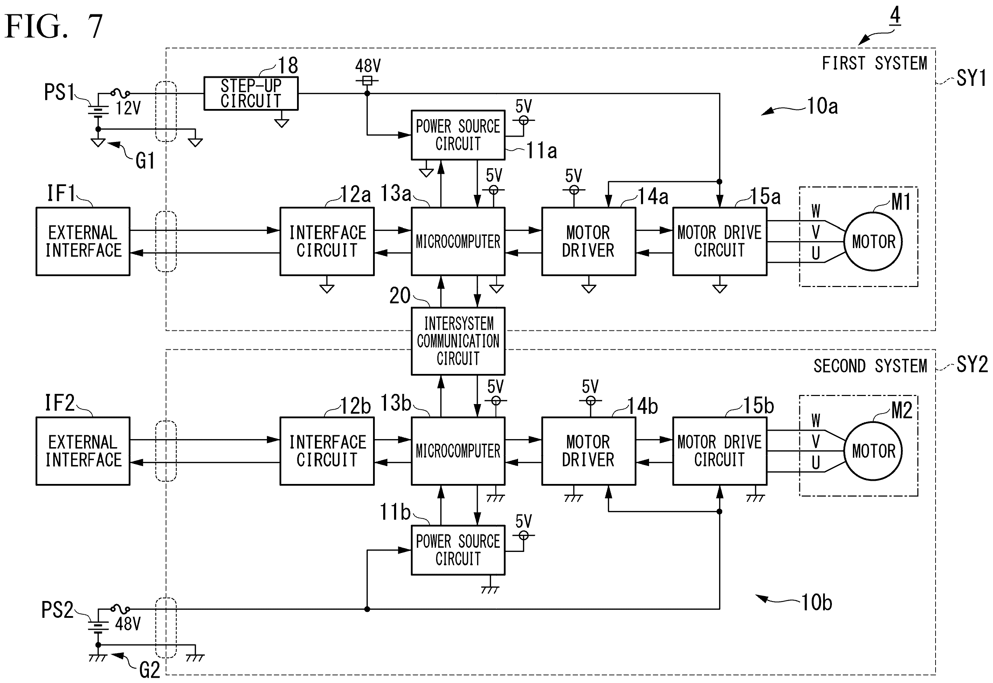

FIG. 7 is a block diagram showing a configuration of a main part of a motor controller according to a fourth embodiment of the present disclosure. In FIG. 7, blocks similar to those shown in FIG. 1 are denoted by the same reference numerals. As shown in FIG. 7, a motor controller 4 of the present embodiment has a configuration in which the step-down circuit 16 of the motor controller 1 shown in FIG. 1 is replaced with a step-up circuit 18. The motor controller 4 is configured to be able to cope with a case where a magnitude relationship between the output voltages of the external power sources PS1 and PS2 is reversed.

In the first embodiment, the output voltage of the external power source PS1 is higher than the output voltage of the external power source PS2. Contrary to this, in the present embodiment, the output voltage of the external power source PS 1 is lower than the output voltage of the external power source PS2. For example, the external power source PS1 is a direct-current power source with an output voltage of 12 [V], and the external power source PS2 is a direct-current power source with an output voltage of 48 [V].

The step-up circuit 18 is connected to the external power source PS1 and steps up the output voltage (first voltage) of the external power source PS1 to a predetermined voltage. The step-up circuit 18 steps up, for example, the output voltage (12 [V]) of the external power source PS1 to the same voltage (48 [V]) as the output voltage of the external power source PS2.

An operation of the motor controller 4 of the present embodiment is basically the same as the operation of the motor controller 1 of the first embodiment, except that the output voltage of the external power source PS1 is stepped up. Therefore, a detailed description thereof will be omitted. In the present embodiment, it should be noted that the present embodiment is different from the first embodiment in magnitudes of the voltages applied to the power source circuits 11a and 11b, the motor drivers 14a and 14b, and the motor drive circuits 15a and 15b.

The motor controller 4 of the present embodiment can cope with a case where the magnitude relationship between the output voltage of the external power source PS1 and the output voltage of the external power source PS2 in the first embodiment is reversed. That is, even the case where the output voltage of the external power source PS1 is lower than the output voltage of the external power source PS2 can be coped with.

The present embodiment can also be applied to the second and third embodiments. Specifically, the step-up circuit 18 may be provided instead of the step-down circuit 16 shown in FIGS. 3 and 4 or the step-down circuit 16A shown in FIGS. 5 and 6.

### [Fifth Embodiment]

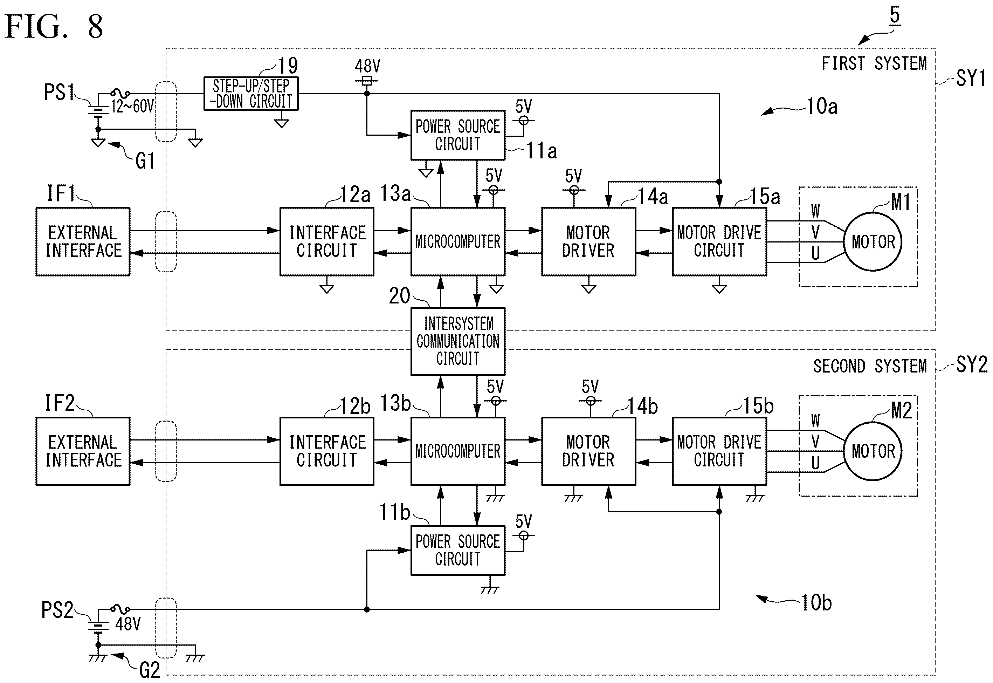

FIG. 8 is a block diagram showing a configuration of a main part of a motor controller according to a fifth embodiment of the present disclosure. In FIG. 8, blocks similar to those shown in FIG. 1 are denoted by the same reference numerals. As shown in FIG. 8, a motor controller 5 of the present embodiment has a configuration in which the step-down circuit 16 of the motor controller 1 shown in FIG. 1 is replaced with a step-up/step-down circuit 19. The motor controller 5 is configured to be able to cope with a case where the output voltage of the external power source PS1 is not determined and the output voltage of the external power source PS2 is determined.

In the first embodiment, the output voltage of the external power source PS 1 is higher than the output voltage of the external power source PS2. Contrary to this, in the present embodiment, the output voltage of the external power source PS1 is not determined, and the output voltage of the external power source PS2 is determined. For example, the external power source PS1 is a direct-current power source of which an output voltage can be in a range of 12 to 60 [V], and the external power source PS2 is a direct-current power source of which an output voltage is 48 [V].

The step-up/step-down circuit 19 is connected to the external power source PS1 and steps up and down the output voltage (first voltage) of the external power source PS 1 to a predetermined voltage. Specifically, in a case where the output voltage of the external power source PS1 is higher than the output voltage of the external power source PS2, the step-up/step-down circuit 19 steps down the output voltage of the external power source PS1 to a predetermined voltage. Contrary to this, in a case where the output voltage of the external power source PS1 is lower than the output voltage of the external power source PS2, the step-up/step-down circuit 19 steps up the output voltage of the external power source PS1 to a predetermined voltage.

For example, in a case where the output voltage of the external power source PS1 is 60 [V], the step-up/step-down circuit 19 steps down the output voltage of the external power source PS1 to the same voltage (48 [V]) as the output voltage of the external power source PS2. Contrary to this, in a case where the output voltage of the external power source PS1 is 12 [V], the step-up/step-down circuit 19 steps up the output voltage of the external power source PS1 to the same voltage (48 [V]) as the output voltage of the external power source PS2.

An operation of the motor controller 5 of the present embodiment is basically the same as the operation of the motor controller 1 of the first embodiment, except that the output voltage of the external power source PS 1 is stepped up and down. Therefore, a detailed description thereof will be omitted. In the present embodiment, it should be noted that the present embodiment is different from the first embodiment in magnitudes of the voltages applied to the power source circuits 11a and 11b, the motor drivers 14a and 14b, and the motor drive circuits 15a and 15b, similarly to the fourth embodiment.

The motor controller 5 of the present embodiment can cope with a case where the output voltage of the external power source PS1 in the first embodiment is not determined and the output voltage of the external power source PS2 is determined. That is, the motor controller 5 of the present embodiment can cope with cases where the output voltage of the external power source PS1 is both lower and higher than the output voltage of the external power source PS2.

The present embodiment can also be applied to the second and third embodiments. Specifically, the step-up/step-down circuit 19 may be provided instead of the step-down circuit 16 shown in FIGS. 3 and 4 or the step-down circuit 16A shown in FIGS. 5 and 6.

Although the embodiments have been described above, the present disclosure is not limited to the above-described embodiments, and may be freely modified without departing from the gist of the present disclosure. For example, in the first to third embodiments described above, the case where the output voltage of the external power source PS 1 is 48 [V] and the output voltage of the external power source PS2 is 12 [V] has been described as an example. However, the output voltages of the external power sources PS1 and PS2 are not limited to 48 [V] and 12 [V], and may be any voltage. In addition, as described in the fourth embodiment, the magnitude relationship between the output voltages of the external power sources PS1 and PS2 may be switched. Alternatively, as described in the fifth embodiment, the output voltage of the external power source PS 1 may not be determined, and the output voltage of the external power source PS2 may be determined.

In addition, in the embodiments described above, the example has been described in which the motor controller performs CAN communication via the external interfaces IF1 and IF2 and receives the CAN signal indicating vehicle states such as a vehicle speed and an engine rotation speed. However, the communication performed by the motor controller may be communication other than the CAN communication, such as Flex-ray.

In addition, in the embodiments described above, the example has been described in which the intersystem communication circuits 20 and 21 and the voltage monitoring circuit 17 are mounted as IC chips. However, the intersystem communication circuits 20 and 21 or the voltage monitoring circuit 17 may be mounted using discrete components.

Each configuration provided in the motor controller described above includes a computer system therein. Moreover, a program for implementing functions of each configuration provided by the motor controller described above may be recorded on a computer-readable recording medium, and by having the computer system read and execute the program recorded on this recording medium, processing in each configuration provided in the motor controller described above may be performed. Here, "having the computer system read and execute the program recorded on the recording medium" includes installing the program on the computer system. Here, the "computer system" mentioned here includes an operating system (OS) and hardware such as a peripheral device.

In addition, the "computer system" may include a plurality of computer devices connected via a network including a communication line such as the Internet, a WAN, a LAN, and a dedicated line. In addition, the "computer-readable recording medium" refers to a portable medium such as a flexible disk, a magneto-optical disk, a ROM, or a CD-ROM, and a storage device such as a hard disk built in a computer system. As described above, the recording medium on which the program is stored may be a non-transitory recording medium such as a CD-ROM.

In addition, the recording medium also includes an internal or external recording medium that is accessible by a distribution server to distribute the program. In addition, a configuration may be adopted in which the program is divided into a plurality of programs and the plurality of programs are downloaded at different times and then combined in each configuration provided in the motor controller, or the distribution server that distributes each of the divided programs may be different. Furthermore, the "computer-readable recording medium" also includes a medium that holds the program for a certain period of time, such as a volatile memory (RAM) inside the computer system that serves as a server or a client in a case where the program is transmitted via a network. In addition, the program may be a program for implementing some of the functions described above. Furthermore, the program may be a so-called difference file (difference program) capable of implementing the functions described above in combination with a program that has already been recorded on the computer system.

### [Reference Signs List]

1 to 3: Motor controller
10a, 10b: Control unit
16, 16A: Step-down circuit
17: Voltage monitoring circuit
18: Step-up circuit
19: Step-up/step-down circuit
21: Intersystem communication circuit
G1, G2: Ground
M1, M2: Motor
PS1, PS2: External power source

## Claims

1. A motor controller for controlling a first motor and a second motor which share an output shaft, the motor controller comprising:
a first control unit configured to include a voltage conversion circuit that converts a first voltage output from a first power source into a predetermined voltage, and to control the first motor using the predetermined voltage converted by the voltage conversion circuit; and
a second control unit configured to control the second motor using a second voltage output from a second power source.

2. The motor controller according to Claim 1,
wherein the voltage conversion circuit converts the first voltage into the second voltage.

3. The motor controller according to Claim 1 or 2,
wherein the second control unit includes a voltage monitoring circuit that monitors the second voltage output from the second power source, and adjusts a motor output of the second motor according to a voltage detected by the voltage monitoring circuit.

4. The motor controller according to Claim 3,
wherein, in a case where the voltage detected by the voltage monitoring circuit is different from the predetermined voltage, the second control unit adjusts the motor output of the second motor so that the motor output of the second motor is the same as a motor output of the first motor.

5. The motor controller according to Claim 1 or 2,
wherein the second control unit includes a voltage monitoring circuit configured to monitor the second voltage output from the second power source, and
the voltage conversion circuit adjusts the predetermined voltage to a voltage monitored by the voltage monitoring circuit.

6. The motor controller according to Claim 5, further comprising:
a communication circuit configured to be provided between the first control unit and the second control unit, and
the communication circuit is configured to transmit the voltage monitored by the voltage monitoring circuit to the voltage conversion circuit.

7. The motor controller according to any one of Claims 1 to 6,
wherein the second voltage output from the second power source is a voltage lower than the first voltage output from the first power source, and
the voltage conversion circuit is a step-down circuit that steps down the first voltage output from the first power source to the second voltage.

8. The motor controller according to any one of Claims 1 to 6,
wherein the second voltage output from the second power source is a voltage higher than the first voltage output from the first power source, and
the voltage conversion circuit is a step-up circuit that steps up the first voltage output from the first power source to the second voltage.

9. The motor controller according to any one of Claims 1 to 6,
wherein the voltage conversion circuit is a step-up/step-down circuit configured to:
step down the first voltage output from the first power source to the second voltage in a case where the first voltage output from the first power source is a voltage higher than the second voltage output from the second power source, and
step up the first voltage output from the first power source to the second voltage in a case where the first voltage output from the first power source is a voltage lower than the second voltage output from the second power source.

10. The motor controller according to any one of Claims 1 to 9,
wherein the first control unit and the second control unit include grounds which are separated from each other.
